(19)

Europäisches
Patentamt
European
Patent Office
Office européen
des brevets

(11)　**EP 4 224 434 A1**

(12)　**EUROPEAN PATENT APPLICATION**

(43) Date of publication:
**09.08.2023　Bulletin 2023/32**

(21) Application number: **22154886.0**

(22) Date of filing: **03.02.2022**

(51) International Patent Classification (IPC):
***G06V 10/776*** (2022.01)　　　***G06V 10/70*** (2022.01)
***G06V 20/58*** (2022.01)

(52) Cooperative Patent Classification (CPC):
**G06V 10/776; G06V 10/87; G06V 20/58**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VOLKSWAGEN AG
38440 Wolfsburg (DE)**

(72) Inventors:
• **Varghese, Serin
38126 Braunschweig (DE)**
• **Schneider, Jan David
38446 Wolfsburg (DE)**
• **Philipp, Robin
38179 Schwülper (DE)**

Remarks:
Amended claims in accordance with Rule 137(2)
EPC.

(54)　**APPARATUS AND METHOD FOR EVALUATING A MACHINE LEARNING MODEL USED FOR ASSISTED OR AUTONOMOUS DRIVING OF A VEHICLE**

(57)　The present disclosure relates to evaluating a machine learning model (110) used for assisted or autonomous driving of a vehicle (300), the machine learning model (110) predicting one or more objects in proximity of the vehicle based on sensor data capturing the proximity of the vehicle. One or more areas (230) in the proximity of the vehicle (300) are determined which are safety-relevant for a current driving state or driving maneuver (210) of the vehicle. Predicted objects inside the one or more relevant areas (230) are assigned a higher computational weight than predicted objects outside the one or more relevant areas. A performance metric of the machine learning model (110) is calculated based on the weighted predicted objects in the proximity of the vehicle (300).

Fig. 1

EP 4 224 434 A1

**Description**

The present disclosure generally relates to the field of evaluating machine learning models and, more particularly, to methods and apparatuses for evaluating machine learning models in the technical field of autonomous driving.

Modern driver assistance systems, used for partial- or fully automated driving, may use machine learning techniques to assess vehicle surroundings, including objects, pedestrians, and other road users. Using deep neural networks, different types of sensor data (e.g., camera, radar, lidar) can be processed to produce an environment model of the surrounding environment. This assessment is generally referred to as 'perception' chain, and within this chain neural networks may be used for different tasks such as semantic segmentation, pose estimation or object detection. For semantic segmentation, a machine learning model (e.g., neural network) may output a pixel-wise labeling of the input images according to a predefined set of class labels, while machine learning models for object detection may render bounding boxes around the objects of defined target classes.

In both cases, state-of-the-art machine learning models may comprise convolutional neural networks (CNNs) which may parametrize a number of computational weights during training with respect to the input using ground truth data. Using gradient based optimization, the parameters can be tuned, and the underlying function may be optimized such that a loss quantified by a loss function may be minimized. In an iterative training process, the neural network learns a function representing the mapping from input to output data. State-of-the-art machine learning models usually comprise various layers (e.g., input layer, hidden layers, output layer) with high numbers of digital filters, resulting in a usually very large number of trainable parameters and thus learn a complex high-dimensional underlying function.

While CNNs may outperform classical computer vision approaches for image processing, neural networks come with a number of challenges. This includes that most networks tend to be unstable towards different kinds of image augmentations, for example naturally occurring augmentations, such as, e.g., rain or fog. This may be true for any other image perturbation, possibly completely unknown to the network from its training data, which is difficult for the network to accurately assess. Generally, neural networks tend to lack generalization towards before unseen data, i.e., data that is semantically different from its training data. However, having a robust neural network could be essential for diverse real-world application in various scenarios under various conditions. That is, since a reliable perception of the environment is safety-critical for assisted or automated driving, being able to quantify safety-related performance of neural networks is highly desirable to verify the safe functioning of the perception module of the automated vehicle.

On the one hand, machine learning models may be evaluated with standard performance metrics such as mean intersection over union (mIoU) or average precision. On the other hand, there are metrics such as mean performance under corruption (mPC) that may quantify the robustness of the machine learning model under adversarial attacks/corruptions.

Performance metrics are different from loss functions. Loss functions show a measure of model performance. They are used to train a machine learning model (using some kind of optimization like Gradient Descent), and they are usually differentiable in the model's parameters. Performance metrics are used to monitor and measure the performance of a model (during training and testing), and do not need to be differentiable.

Standard performance metrics mentioned above only define how good or how bad the predictions of the neural network are. However, this gives no understanding of its safety relevance. Robustness metrics like mPC calculate the performance of the neural networks under pre-defined corruptions, like fog, snow, rain, blurring, etc. However, this does not ensure the generalization to unseen/undefined corruption that an automated driving car would encounter. As the mPC is by definition an average over multiple corruptions at different strengths, this is not an accurate estimate of the possible vulnerability of the network for certain corruptions at a given time. In summary, existing metrics do not take safety-relevant properties into account, and rather only give an estimate of the overall (or averaged) performance of the neural networks.

In particular, in the field of automated driving, there may be a need for safety-oriented metrics for evaluating neural networks used in the perception chain of automated driving.

This need is addressed by methods and apparatuses in accordance with the independent claims. Potentially advantageous embodiments are address by dependent claims.

According to a first aspect, the present disclosure provides a method for evaluating a machine learning model used for assisted or autonomous driving of a vehicle. The machine learning model is capable of predicting one or more objects in proximity (surrounding) of the vehicle based on sensor data capturing the proximity/surrounding of the vehicle. The method comprises determining one or more areas in the proximity (surrounding) of the vehicle which are safety-relevant for a current driving state / maneuver of the vehicle, assigning predicted objects inside the one or more safety-relevant areas a higher relevance-weight than predicted objects outside the one or more safety-relevant areas, and calculating a performance metric of the machine learning model based on the relevance-weighted predicted objects in the proximity of the vehicle. In this regard, it is possible to evaluate the performance of the machine learning model with respect to the prediction / perception of objects that matter for the current driving state or driving maneuver of the vehicle. Accurate prediction / perception of less relevant objects is considered less important than accurate prediction / perception of objects which may interfere with the current driving state or driving maneuver of the vehicle. Thus, objects within the one or more safety-relevant areas may have a larger influence on the evaluation of the machine learning model.

In some embodiments, determining the one or more safety-relevant areas may comprise determining areas interfering with a projected driving trajectory of the vehicle. The projected driving trajectory of the vehicle may e.g., be determined based on the current driving state or driving maneuver of the vehicle as well as a captured driver intention. For example, an actuation of a turn signal may indicate a turn on the next crossing or a lane change, and the like. Also, if a navigational system of the vehicle is used, for example, a driving trajectory of the vehicle may be well predicted. Thus, accurate prediction of objects interfering with the intended driving maneuver may be considered more important than prediction of objects not relevant for the intended driving maneuver.

In some embodiments, determining the one or more safety-relevant areas is based on an actual or projected driving maneuver of the vehicle and/or infrastructure elements in the proximity of the vehicle. Infrastructure elements may be streets, crossings, buildings, sidewalks, traffic signs, traffic lights, other vehicles, etc. The one or more safety-relevant areas may be obtained by combining the actual or projected driving maneuver of the vehicle and such infrastructure elements in the proximity of the vehicle, for example.

In some embodiments, determining the one or more safety-relevant areas may comprise determining at least one of

- an area in front of or adjacent to the vehicle,
- a lane to be changed to,
- a lane adjacent to a lane to be changed to,
- a lane that merges with a lane in which the vehicle is currently traveling,
- one or more intersecting lanes, and/or
- an area including vulnerable road users in front of or adjacent to the vehicle.

In some embodiments, the one or more safety-relevant areas may be determined on a per-image basis. The proximity/surrounding of the vehicle may be captured by sensors (e.g., cameras, lidar, radar, etc.) frame-wise, for example. Each frame may correspond to a captured image. Object detection and/or classification may then be performed by the machine learning model on a frame-by-frame (per-image) basis. Therefore, also the safety-relevant areas may be determined in the captured images on a per-image basis.

Predicted objects inside the one or more safety-relevant areas may be assigned a higher relevance-weight while predicted objects outside the one or more safety-relevant areas are assigned a lower relevance-weight. In a binary case, for example, predicted objects inside the one or more safety-relevant areas may be assigned a '1" and predicted objects outside the one or more safety-relevant areas are assigned a '0'. In other words, calculating the performance metric may comprise including predicted objects inside the one or more safety-relevant areas into the metric calculation and disregarding predicted objects outside the one or more safety-relevant areas from the metric calculation. However, the skilled person having benefit from the present disclosure will appreciate that many other relevance-weights may be feasible, depending on a particular use-case.

In some embodiments, calculating the performance metric may comprise calculating an individual performance metric for each object inside the one or more safety-relevant areas. In this way, a fine granularity of performance results on a per-object basis may be achieved. Another option would be to calculate individual performance metrics for each safety-relevant area, for example. Thus, calculating the performance metric may comprise calculating a combined performance metric for all predicted objects inside the one or more safety-relevant areas. In that latter case, performance results on a per-area basis may be achieved. Many other granularities are possible and dependent on the user interest.

In some embodiments, the predicted objects may dynamic (moving) objects, such as other vehicles or living beings.

Calculating the performance metric may comprise calculating any of the known evaluation metrics (for example, Intersection over Union, IoU, or mean average precision, mAP).

In some embodiments, the method may further comprise executing the method for a plurality of different machine learning models (under test) and/or a plurality of different driving states or driving maneuvers (under test) to find a machine learning model having the highest performance metric for a respective driving state or driving maneuver. In this way, machine learning models may be identified and employed which deliver most reliable results in certain situations. Safety for assisted or autonomous driving may be increased.

According to a further aspect, the present disclosure provides a computer program product comprising instructions which, when the program is executed by a programmable hardware device, cause the programmable hardware device to carry out a method of any one of the preceding embodiments.

According to yet a further aspect, the present disclosure provides an apparatus for evaluating a machine learning model used for assisted or autonomous driving of a vehicle. The machine learning model is configured to predict one or more objects in proximity of the vehicle based on sensor data capturing the proximity of the vehicle. The apparatus comprises processing circuitry configured to determine one or more areas in the proximity of the vehicle which are safety-relevant for a current driving state or driving maneuver of the vehicle, assign predicted objects inside the one or more safety-relevant areas a higher relevance-weight than predicted objects outside the one or more safety-relevant areas, and calculate a performance metric of the machine learning model based on the relevance-weighted predicted objects in the proximity of the vehicle.

Embodiments provide a safety-relevant metric which quantifies the ability of the machine learning model to detect relevant objects in a scene. This is in contrast to conventional metrics which are usually only performance related and do not take safety aspects into consideration. The proposed metric takes both the performance (accuracy) of the machine learning model / network and the relevance of each object into account. The proposed metric can be calculated using any kind of accuracy calculation (e.g., intersection over union). The proposed metric can be applied to any detection task (e.g., object detection or semantic segmentation). The proposed metric can be extended towards tasks such as 3D object detection. The proposed metric takes additional information into account and allows for accurate calculation of relevant areas.

Some examples of apparatuses and/or methods will be described in the following by way of example only, and with reference to the accompanying figures, in which

Fig. 1        schematically shows an apparatus for evaluating a machine learning model according to an embodiment;

Fig. 2        a schematic diagram to illustrate an assignment of maneuver categories to base areas;

Figs. 3 to 8    illustrate example determinations of relevant areas from the base areas;

Fig. 9        a schematic representation of an exemplary acceleration profile of a vehicle;

Figs. 10,11    illustrate example determinations of relevant areas from the base areas;

Fig. 12        illustrates an example determination of relevant areas in a real environment; and

Fig. 13        a schematic flow diagram of an embodiment of a method for evaluating a machine learning model.

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

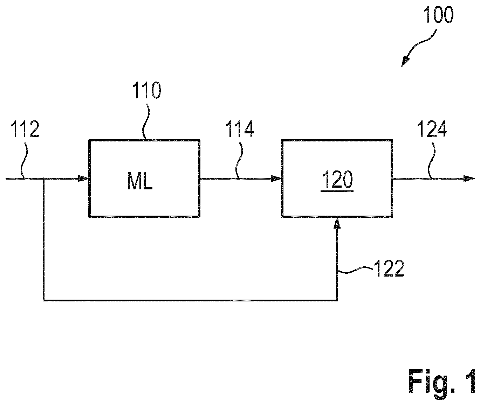

Fig. 1 schematically shows an apparatus 100 for evaluating a machine learning model 110 used for assisted or autonomous driving of a vehicle as, for example, for advanced driver-assistance systems (ADAS).

The vehicle may be a machine that transports people or cargo. Vehicles may include land vehicles such as wagons, bicycles, motor vehicles (motorcycles, cars, trucks, buses), railed vehicles (trains, trams), watercraft (ships, boats), amphibious vehicles (screw-propelled vehicle, hovercraft), aircraft (airplanes, helicopters, aerostat) and spacecraft.

The machine learning model 110 may comprise an artificial neural network (ANN) as, for example, a convolutional neural network (CNN). CNNs have proven particularly successful in processing visual and other two-dimensional data. However, the skilled person having benefit from the present disclosure will appreciate that embodiments are not limited to CNNs. Depending on the task of the machine learning model 110, also other implementations (e.g., long short-term memory, generative adversarial network, etc.) may be feasible.

The machine learning model 110 is configured to predict or classify one or more objects in proximity of the (ego) vehicle based on sensor data 112 of the proximity of the vehicle. Sensor data 112 or data derived thereof may be input to machine learning model 110 (e.g., to an input layer thereof). The machine learning model 110 may be configured to detect and/or classify objects the proximity of the vehicle based on camera data, lidar data, radar data, or a combination thereof (input data 112). Machine learning may continuously render the vehicle's surrounding environment and make predictions of possible changes to those surroundings. Machine learning tasks in a self-driving car may be divided into four sub-tasks: object detection, object identification or recognition, object classification, and object localization, and prediction of movement. Machine learning algorithms can be loosely divided into four categories: regression algorithms; pattern recognition; cluster algorithms; decision matrix algorithms. Some regression algorithms that may be used for self-driving cars are: Bayesian regression, neural network regression, decision forest regression.

However, one issue for autonomous driving is that objects in the proximity / surrounding of the vehicle are wrongly classified by the machine learning model 110. Data gathered by the vehicle's different sensors is collected and then interpreted by the machine learning model 110. But with just a few pixels of difference in an image produced by a camera system, a vehicle might incorrectly perceive a stop sign as something more innocuous, like a speed limit sign. If the machine learning model 110 similarly mistook a pedestrian for a lamp post, then it would not anticipate that it might move. Therefore, it may be considered important to measure a classification / prediction accuracy of machine learning model 110.

Classification accuracy may be used to measure the performance of the machine learning model 110. Choosing the right performance metric may be crucial while evaluating machine learning models. Various metrics have been proposed to evaluate machine learning models in different applications. Conventional performance metrics only define how good or how bad the predictions of the machine learning models are. However, this gives no understanding of its safety relevance. Robustness metrics like mPC calculate the performance of the machine learning model under pre-defined corruptions, like fog, snow, rain, blurring, etc. This does not ensure the generalization to unseen/undefined corruption that the automated driving car would encounter. As the mPC is by definition an average over multiple corruptions at different strengths, this is not an accurate estimate of the possible vulnerability of the network for certain corruptions at a given time. Existing performance metrics do not take safety-relevant properties into account, and rather only give an estimate of the overall (or averaged) performance of the machine learning models.

Therefore, the proposed apparatus 100 further comprises processing circuitry 120 coupled to an output 114 of machine learning model 110, wherein the processing circuitry 120 is configured to determine one or more areas in the proximity surrounding of the vehicle which are safety-relevant for a current driving state or driving maneuver of the vehicle. For this purpose, processing circuitry 120 may optionally comprise an input 122 for the sensor data 112 of the proximity of the vehicle or image data derived therefrom. Based on the sensor or image data 112 and the current driving state or driving maneuver, processing circuitry 120 may determine safety-relevant areas or zones in the images of the proximity / surrounding of the vehicle. Output 114 of machine learning model 110 may comprise images of the proximity / surrounding of the vehicle including predicted/classified objects in the proximity of the vehicle.

A safety-relevant area may be an area in the surrounding of the vehicle which is relevant for the vehicle's safety and/or relevant for the safety of objects/persons in the area. A safety-relevant area may depend on the vehicle's current driving state (including position, speed, acceleration, etc.) and/or the vehicle's intended driving maneuver (e.g., left turn, right turn, lane change, etc.). A safety-relevant area may thus be an area interfering with a projected driving trajectory of the vehicle. A safety-relevant area may include infrastructure elements, vehicles, or living beings potentially interfering with the (ego) vehicle. Therefore, processing circuitry 120 may be configured to determine one or more areas interfering with the driving trajectory of the vehicle based on the sensor or image data 112 as well as positional information and/or geoinformation of the surrounding and the (ego) vehicle. The driving trajectory may be an actual driving trajectory or a projected (estimated) driving trajectory of the vehicle. Processing circuitry 120 may optionally interface with a navigational system of the vehicle.

A safety-relevant area may be a strictly delimited area in the surrounding of the (ego) vehicle which is safety relevant for a current driving state or driving maneuver of the vehicle. For example, a safety-relevant area may be ahead of the vehicle (e.g., if the vehicle is going forward), right (e.g., if the vehicle is going right) or left to the vehicle (e.g., if the vehicle is going left). If the vehicle is going backwards, the safety-relevant area may also be behind the vehicle. In particular, processing circuitry 120 may be configured to determine - as safety-relevant area

- at least one of

  - an area in front of or adjacent to the vehicle's position,
  - a lane to be changed to,
  - a lane adjacent to a lane to be changed to,
  - a lane that merges with a lane in which the vehicle is traveling,
  - one or more intersecting lanes,
  - an area including vulnerable road users in front of or adjacent to the vehicle.

For optimum results, processing circuitry 120 may be configured to determine the one or more safety-relevant areas in the vehicle's surrounding on a per-image (per-frame) basis. Thus, each frame of sensor or image data 112 (and/or output data 114) may be processed to determine one or more safety-relevant areas in said frame. The frame rate is the frequency at which consecutive images (frames) of sensor or image data 112 are captured or displayed.

Once the safety-relevant areas have been identified in the images, processing circuitry 120 is further configured to assign predicted / classified objects inside the one or more safety-relevant areas a higher relevance-weight than predicted / classified objects outside the one or more safety-relevant areas. A performance metric 124 of the machine learning model 110 is then calculated based on the relevance-weighted predicted objects in the proximity of the (ego) vehicle. In this way, a safety-oriented performance metric for machine learning model 110 may be provided. For example, processing circuitry 120 may be configured to include predicted objects inside the one or more safety-relevant areas into the performance metric calculation and disregard predicted objects outside the one or more safety-relevant areas from the performance metric calculation.

In a binary case, for example, predicted objects inside the one or more safety-relevant areas may be assigned a relevance-weight of "1" and predicted objects outside the one or more safety-relevant areas may be assigned a relevance-weight of "0". Other weighting-schemes may also be feasible depending on the scenario. For another example, predicted objects inside the one or more safety-relevant areas may be assigned a relevance-weight in accordance with their respective distance to the vehicle and/or in accordance with their respective object class. Predicted objects inside the one or more safety-relevant areas may be assigned a higher relevance-weight if their respective distance to the vehicle is small and a lower relevance-weight if their respective distance to the vehicle is large. Predicted objects inside the one or more safety-relevant areas may be assigned a higher relevance-weight if there are classified as involving living beings and a lower relevance-weight if their they are classified as not involving living beings, for example.

In some example implementations, processing circuitry 120 may be configured to calculate respective individual performance metrics for each detected object class inside the one or more relevant areas. Alternatively, or additionally, processing circuitry 120 may be configured to calculate a combined performance metric for all detected objects inside the one or more relevant areas.

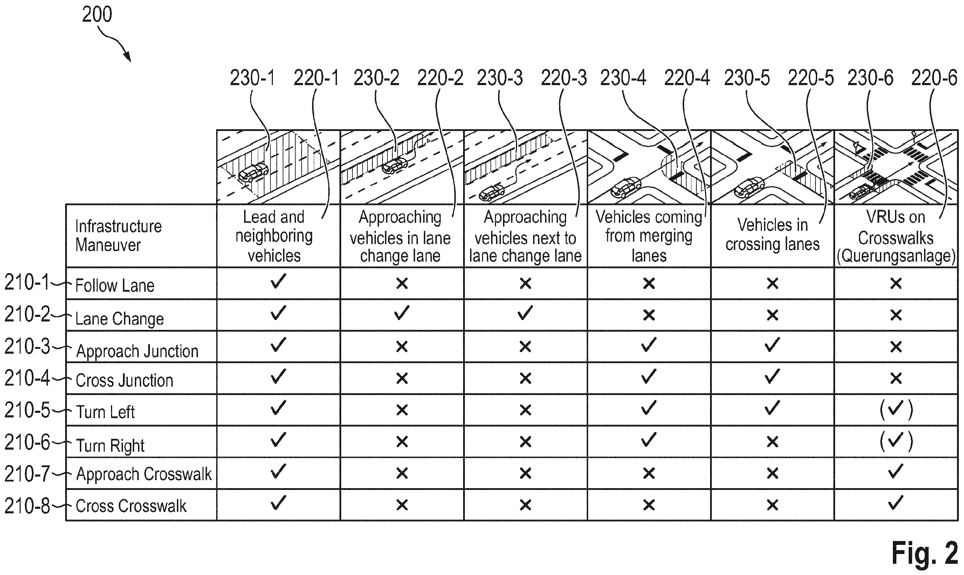

Fig. 2 shows a table illustrating an assignment 200 of driving maneuver categories 210-x to base areas 220-x. In the example shown, the assignment 200 takes the form of a table in which the individual driving maneuver categories 210-x are linked to individual base areas 220-x. The base areas 220-x may be defined in particular in general terms. This means in particular that the base areas 220-x do not (yet) have a concrete reference (e.g. exact dimensions, positions, etc.) to a current environment of the vehicle, but are defined relative to the vehicle or a maneuver in general (e.g. base area includes pedestrian crossing). For example, the base areas 220-x can be defined manually for the different driving maneuver categories and stored in the table. However, it may also be possible to define the base areas 220-x automatically, for example with the aid of machine learning methods and/or and/or artificial intelligence.

The driving maneuver categories 210-x and the base areas 220-x may have been determined and/or defined manually or automatically, for example, based on empirical data. For a particular driving maneuver category 210-x, the base areas 220-x associated with that maneuver category 210-x may be determined based on the assignment 200. If the particular driving maneuver category 210-x is, for example, 210-6 ("turn right"), the base areas 220-1 and 220-4 and, if there is a pedestrian crossing at a preceding intersection, also the base area 220-6 may be determined for this.

In this regard, the base areas 220-x may correspond in particular to the following areas:

- a base area 220-1, which comprises preceding and adjacent vehicles,
- a base area 220-2 that includes approaching vehicles in a lane into which is to be changed,
- a base area 220-3 comprising approaching vehicles in a lane adjacent to a lane into which a change is to be made,
- a base area 220-4 that includes vehicles traveling in a lane that is merged with a lane in which the vehicle is traveling,
- a base area 220-5 that includes vehicles in intersecting lanes,
- a base area 220-6 that includes vulnerable road users at pedestrian crossings.

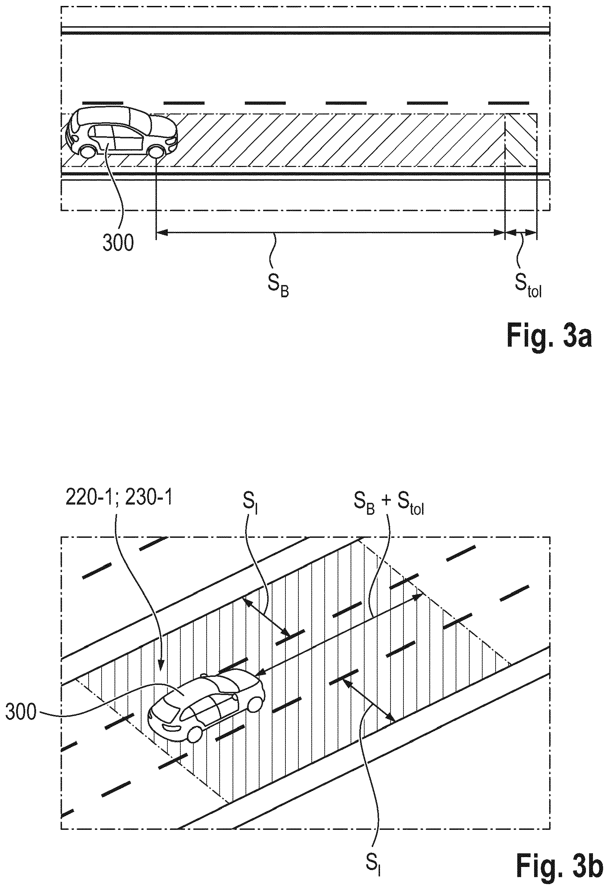

In Figures 3 to 11, determination of safety-relevant areas based on the base areas 220-x is explained by way of example. In the examples shown, the determination is carried out based on parameterizable equations by inserting the respective parameters (of the vehicle and/or the environment) into the equations accordingly.

Figures 3a and 3b show schematic representations to illustrate the determination of a safety-relevant area 230-1 from the base area 220-1. The determination may be carried out with the aid of an equation using a lane width $S_l$ known from an environment map and an additional tolerance distance $S_{tol}$. This results in a distance $S_B$ in front of the ego vehicle 300, which is to be monitored:

$$S_B = \frac{a_{acell,max} \cdot t^2_{reaction}}{2} + v_0 \cdot t_{reaction} + \frac{(a_{acell,max} \cdot t_{reaction} + v_0)^2}{2 \cdot a_{brake,max}}$$

The first summand relates to a distance traveled due to a maximum possible acceleration $a_{acell,max}$ during a reaction time $t_{reaction}$, the second summand relates to a distance traveled due to a constant speed $v_0$ during the reaction time $t_{reaction}$, and the third summand concerns a braking distance at maximum braking (deceleration) with $a_{brake,max}$ for the reaction time $t_{reaction}$.

As shown in **Fig. 3b,** the safety-relevant area 230-1 may then result from a sum of a vehicle length and $S_B$ + Si as well as the two adjacent lanes with the respective lane width Si and a width of the vehicle's lane $S_l$.

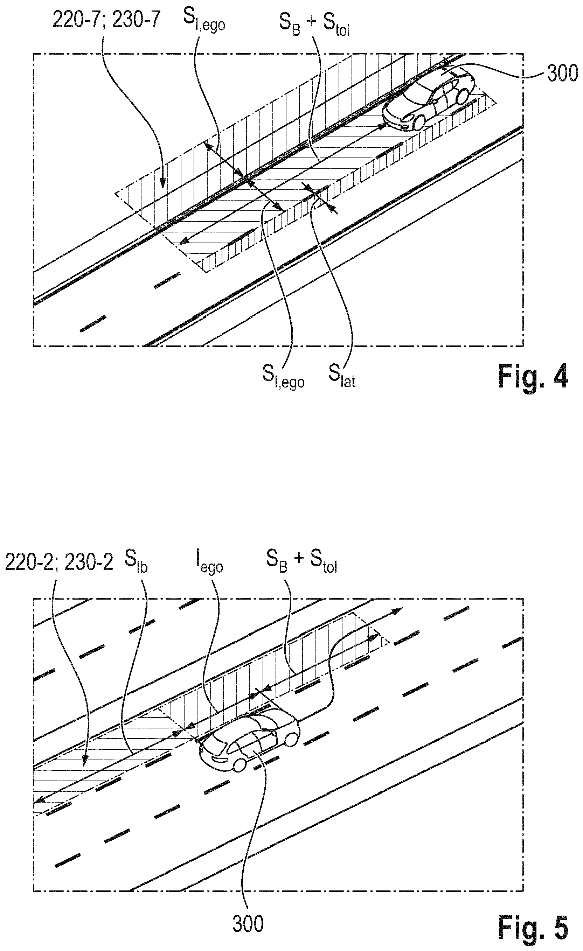

If oncoming traffic from oncoming vehicles is to be expected **(Fig. 4),** a surrounding safety-relevant area 230-7 can be calculated from a corresponding base area 220-7, for example, using the preceding equation for $S_B$ with a tolerance $S_{tol}$, additionally taking into account a lateral offset $S_{lat}$ as follows, in order to in particular to take into account a swerving onto a laterally adjacent area on a respective opposite lane in each case:

$$S_{lat} = S_{lat,ego} + S_{lat,obj} + S_{tol}$$

with

$$S_{lat,ego} = \frac{a_{ego,lat\ accel,max} \cdot t^2_{reaction,ego}}{2} + \frac{(a_{ego,lat\ accel,max} \cdot t_{reaction,ego})^2}{2 \cdot a_{ego,lat\ brake,max}}$$

$$S_{lat,obj} = \frac{a_{obj,lat\ accel,max} \cdot t^2_{reaction,obj}}{2} + \frac{(a_{obj,lat\ accel,max} \cdot t_{reaction,obj})^2}{2 \cdot a_{obj,lat\ brake,max}}$$

Here, the first summands relate to a distance due to maximum lateral acceleration $a_{ego,lat\ accel,max}$, or $a_{obj,lat\ accel,max}$ for a reaction time $t_{reaction,ego}$ of vehicle 300 ("ego") or a reaction time $t_{reaction,obj}$ of an oncoming vehicle ("obj"). The second summands relate to a lateral acceleration during braking with $a_{ego,lat\ brakel,max}$, or $a_{obj,lat\ brake,max}$ for reaction times $t_{reaction,ego}$ and $t_{reaction,obj}$, respectively. This results in a surrounding safety-relevant area 230-7 as shown in Fig. 4 considering the quantity $S_{l,ego}$ for the lane width of the vehicle 300, which corresponds to the width of the vehicle 300.

**Fig. 5** shows a schematic diagram to illustrate a determination of safety-relevant area 230-2 as from base area 220-2, which includes approaching vehicles in a lane to be changed to. Further, in addition to the equation given for calculating $S_B$ and a length of the vehicle 300 $l_{ego}$, the following equation may be used for determining a rearward sub-area having a distance $S_{lb}$:

$$S_{lb} = \frac{v^2_{limit}}{2a_{brake,max}} + t_{reaction} \cdot v_{limit}$$,

where $v_{limit}$ denotes a current speed limit. The safety-relevant area 230-2 can then be determined accordingly from the variables shown in Fig. 5 and a lane width $S_l$ of the adjacent lane.

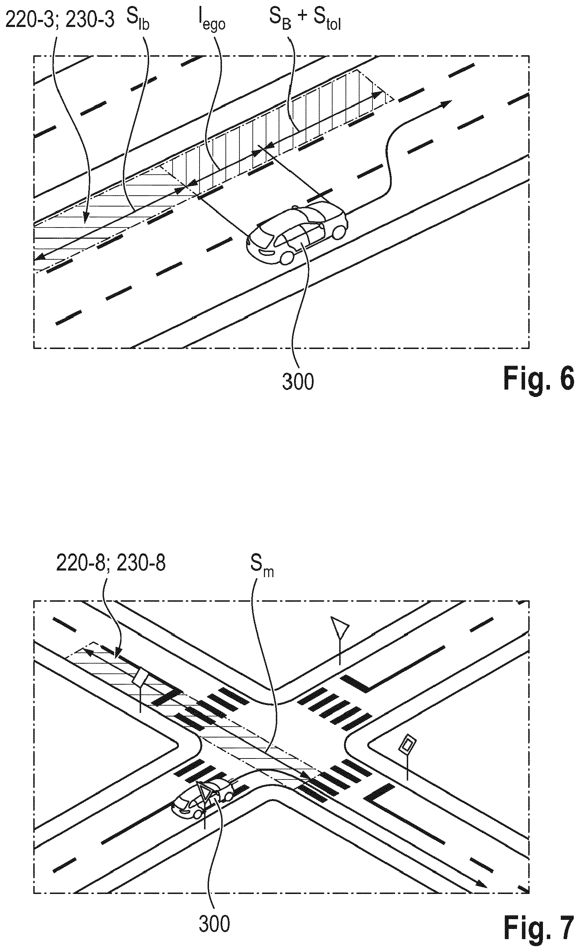

In **Fig. 6,** a schematic illustration is shown to clarify the determination of a surrounding safety-relevant area 230-3 from base area 220-3, which includes approaching vehicles in a lane adjacent to a lane to be changed to. The determination here may be basically the same as for the base area 220-2 shown in Fig. 5 or the surrounding safety-relevant area 230-2 determined from this.

In Fig. 7, a schematic illustration is shown to clarify the determination of a safety-relevant area 230-8 from a base area 220-8, which includes vehicles traveling on a lane that merges with a lane on which the ego vehicle 300 is traveling. Here, it is assumed that the ego vehicle 300 does not have the right of way ("give right of way ").

$$S_m = S_B + t_{ego,intersection} \cdot v_{limit} + (S_{acc,ego} - S_{acc,obj})$$

with

$$S_{acc,ego} = \frac{v_t^2}{2a_{ego}}$$

$$S_{acc,obj} = v_t \cdot t = v_t \cdot \frac{v_t - v_0}{a_{ego}}$$

and

$$S_B = v_{limit} \cdot t_{reaction} + \frac{v_{limit}^2}{2a_{brake,max}}$$

where $t_{ego,intersection}$ is a time to reach the lane on the intersection to be turned into, and $v_t$ is a target speed of the ego vehicle 300 on the lane the vehicle is turning into. Together with a lane width of the lane onto which the vehicle is turning into, which can be retrieved from a map, for example, the safety-relevant area 230-8 can be determined from the base area 220-8. The term $S_{acc,ego}$ is the distance that the vehicle 50 completes while accelerating to the target velocity $v_t$. The term $S_{acc,obj}$ is the distance that potentially existing other vehicles complete while the ego vehicle 300 accelerates to the target speed vt.

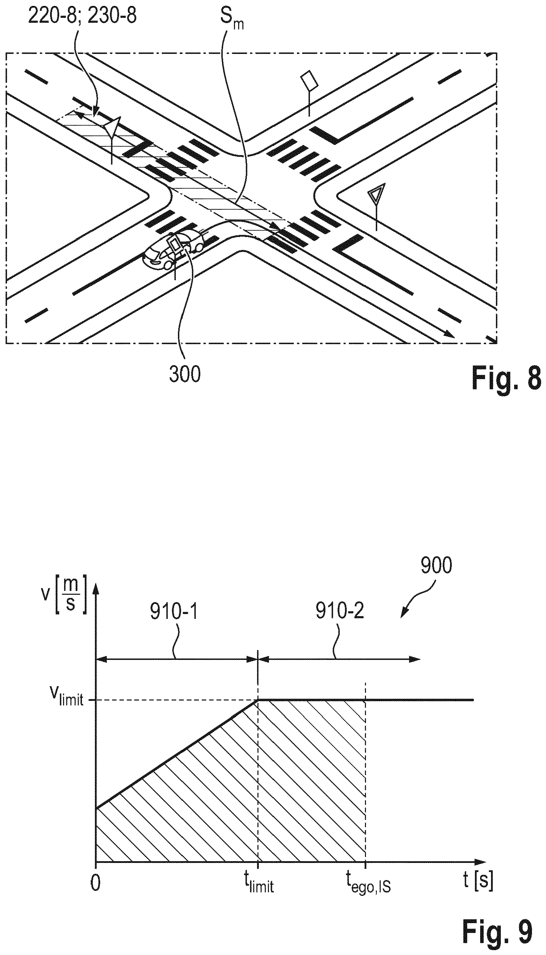

In **Fig. 8,** a schematic diagram is shown to illustrate the determination of safety-relevant area 230-8 from the base area 220-8, which includes vehicles traveling in a lane that merges with a lane on which the vehicle 300 is traveling. Here, it is assumed that the vehicle 300 has the right of way.

The determination can then be done with the following equation:

$$S_m = v_{limit} \cdot t_{reaction} + \frac{v_{limit}^2}{2a_{brake,max}}$$

Compared to the situation shown in Fig. 7, $S_m$ is shortened in the scene shown in Fig. 8.

An acceleration profile of the ego vehicle 300 determined on the basis of the determined maneuver category may be taken into account when determining at least one of the respective associated safety-relevant areas 230-x.

An acceleration profile 900 is shown by way of example in **Fig. 9** for the situation shown in Figs. 7 and 8. Shown is a progression of a velocity v of the vehicle over time t. In a first region 910-1, acceleration of the vehicle occurs. In a subsequent region 910-2 starting at a time $t_{limit}$, the final velocity $v_{limit}$ is reached and the velocity remains constant. With the speed $v_{limit}$, the vehicle travels in the direction of the intersection (cf. Figs. 7 and 8). $t_{ego,IS}$ denotes the time required for the vehicle to reach the end of the intersection or the position where both lanes are joined.

Based on this, the situation shown in Fig. 7 then results in the following equation for determining the surrounding safety-relevant areas 230-8:

$$S_m = t_{ego,IS} \cdot v_{limit} + \frac{v_{limit}^2}{2a_{obj,brake,max}} + \rho_{obj} \cdot v_{limit}$$

The first summand relates in particular to a distance covered by another vehicle in time $t_{ego,IS}$, where $t_{ego,IS}$ is in particular the time taken by the vehicle 300 to reach the lane. $v_{limit}$ is the maximum permissible speed (speed limit). The second and third summands concern a braking distance of a potential other road user on the lane into which the vehicle is turning. $\rho_{obj}$ denotes a reaction time of the other road user.

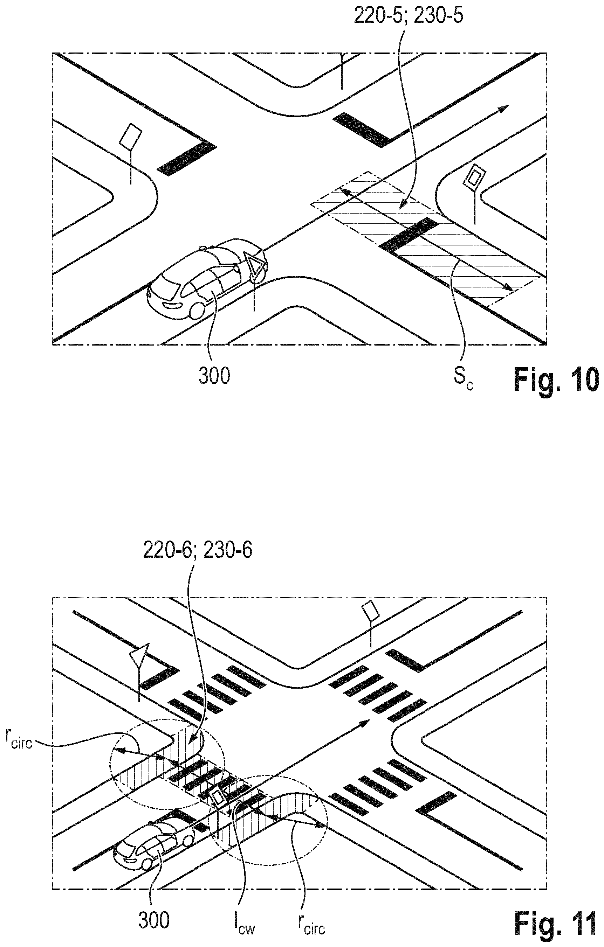

In Fig. 10, a schematic illustration is shown to clarify the determination of the surrounding safety-relevant area 230-5 from the base area 220-5, which includes vehicles in intersecting lanes. Without considering an acceleration profile 900 (Fig. 9), the safety-relevant area 230-5 can be determined using the following equation:

$$S_c = \left(t_{ego,exit} - t_0\right) \cdot v_{limit} + s_{tol}$$

where $t_{ego,exit}$ is a time when the vehicle 300 crossed the intersection and $t_0$ is a current time. In particular, $s_{tol}$ is an exemplarily chosen additional safety distance, but it can also be omitted.

If the acceleration profile 900 shown in Fig. 9 is taken into account, the safety-relevant area 230-5 can be determined using the following equation:

$$S_c = t_{ego,IS} \cdot v_{limit} + S_{sm}$$

Here, $S_{sm}$ is in particular an additional safety distance selected as an example (e.g. 20 cm), but it can also be omitted.

**Fig. 11** shows a schematic representation to illustrate the determination of a safety-relevant area 230-6 from base area 220-6, which includes vulnerable road users at pedestrian crossings. Here, the safety-relevant area 230-6 can be determined based on a length $l_{cw}$ and a width (not shown) of the pedestrian crossing and a circular area around each end of the pedestrian crossing. The circular areas can be determined, for example, according to the following equation.

$$r_{circ} = t_{ego,cross} \cdot v_{max,pd}$$

where $r_{circ}$ is a radius of the circular areas, $t_{ego,cross}$ is a time taken by the vehicle 300 to cross the pedestrian crossing, and $v_{max,pd}$ is a maximum speed of a pedestrian. The circular areas at the ends can still be trimmed by areas that are not passable and/or that belong to passable areas outside the pedestrian crossing.

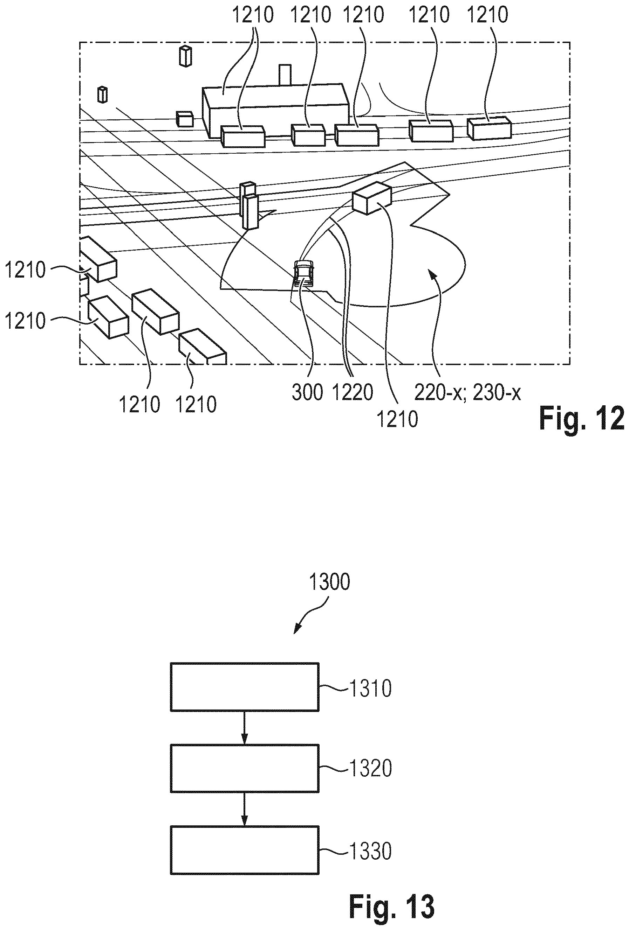

**Fig. 12** shows a schematic representation to illustrate safety-relevant areas 230-x in a real environment in which the ego vehicle 300 is moving and in which other road users 1210 are present. Also shown are schematic courses of lanes 1220 (only a few are exemplarily provided with their own reference sign), which may be stored in a map and may be called up position-dependent from the map for the current environment.

**Fig. 13** shows a schematic flow chart of an embodiment of a method of evaluating a machine learning model 110 used for assisted or autonomous driving of a vehicle, the machine learning model 110 predicting one or more objects in proximity of the vehicle based on sensor data capturing the proximity of the vehicle.

Method 1300 includes determining 1310 one or more areas 230-x in the proximity of the vehicle 300 which are safety-relevant for a current driving state or driving maneuver of the vehicle. Method 1300 includes 1320 assigning predicted objects inside the one or more relevant areas 230-x a higher computational weight than predicted objects outside the one or more relevant areas 230-x. Method 1300 further includes calculating 1330 a performance metric of the machine learning model based on the weighted predicted objects in the proximity of the vehicle 300.

Method 1300 may be executed for a plurality of different machine learning models and/or a plurality of different driving states or driving maneuvers to find a machine learning model having the highest performance metric for a respective driving state or driving maneuver.

One goal of the proposed concept is to derive a metric or KPI (key performance indicator) that not only indicates the ability of the machine learning model 110 to detect relevant objects in a captured scene, but also takes into account the relevance of each predicted / classified object individually. Since the (ego) vehicle 300 moves at a limited speed, not all objects may be equally relevant: For example, an oncoming truck during an unprotected left turn maneuver will likely be of more importance than a parking vehicle in close proximity. Therefore, it may be intuitive to evaluate the neural network performance with respect to relevant objects rather than taking into account all objects equally when evaluating network performance.

Embodiments of the present disclosure provide a safety-relevant metric/KPI which quantifies the ability of the machine learning model 110 to detect relevant/important objects in a scene. The proposed safety-relevant performance metric may take both the performance (accuracy) of the network 110, and the importance of each object into account.

The safety-relevant performance metric may be calculated using any kind of accuracy calculation (e.g. intersection over union, average precision, etc.). The safety-relevant performance metric may be applied to any detection task (e.g., object detection, semantic segmentation, pedestrian detection, pose estimation, etc.). The safety-relevant performance metric may be extended towards tasks such as 3D object detection with the use of depth information (either from sensors, or using depth estimation networks). The safety-relevant performance metric may can be used for benchmarking different machine learning models on this relevance/importance criteria, rather than simply looking at the accuracy. This could be important specially when dealing with machine learning models provided by suppliers to an OEM as a measure of ensuring safety-relevant properties.

Conventional performance metrics essentially measure the per-object accuracy of the network predictions and perform an average across multiple images. Therefore, each object in the image conventionally has the same importance towards the result of the metric computation. However, in practice, each dynamic object (e.g., vehicle, pedestrian, building, sidewalk, etc.) can be of different importance / relevance towards an automated vehicle. Naturally, the distance to the (ego) vehicle influences the amount of time the vehicle has to react to an object in its trajectory. That is, predicted objects in safety-relevant areas may be assigned relevance-weight depending on their distance to the (ego) vehicle. For example, predicted objects having less distance to the vehicle may be assigned a higher relevance-weight than predicted objects having a larger distance to the vehicle. On the other hand, it might not be of significant importance for a neural network to detect objects further away from the vehicle. Similar implications exist not only for the longitudinal distance, but also for the lateral distance.

This can be visualized in a relevance zone 230-x, which illustrates that there is a certain area relative to the automated vehicle where it is highly essential for the machine learning model 110 to detect all dynamic objects. However, simply using a distance metric to calculate the relevant areas could also have disadvantages: For example, objects which have the same distance to the vehicle, but are in front and behind the ego vehicle, respectively, will likely have different importance. The same is true for objects located in different positions when performing certain maneuvers, e.g. a left turn on a larger crossing. As already mentioned, an oncoming truck during an unprotected left turn maneuver will likely be of more importance than a parking vehicle in close proximity even though the truck might be farther away from the ego vehicle.

To calculate the relevant areas 230-x, the following data may be used which may be be recorded during testing drives with prototype vehicles:

- Semantics about the ego vehicle behavior/intention in maneuvers (turns, lane changes, etc.)
- Ego vehicle states over time (position, speed, acceleration)
- Information about the infrastructure (crossings, number of lanes, etc.)

Using the definition of the relevant areas 230-x, a per-image calculation of the relevant areas may be applied. That is, the aforementioned recorded vehicle data and the data acquired additionally to the recorded images may be utilized to provide accurate calculations of the relevant areas 230-x. Using the relevant areas 230-x, an object may be included into the metric calculation or disregarded from the calculation. That is, the relevant areas 230-x may be used as a binary object-wise relevance-weighting factor for the calculation of metrics based on object accuracy. However, also non-binary relevance-weighting factors would be possible.

Even within the relevant areas 230-x, one could apply different weightings, for example a weighting based on the object-wise distance to the ego vehicle 300. Or, weighting factors dependent on the class of objects: The weighting may be be different for different dynamic objects, for example to prioritize certain vulnerable classes as pedestrians and bicyclists more than more robust traffic participants such as heavy trucks. Weighting factors for such vulnerable classes may be higher. Objects such as sky and building may have lower weighting factors. The proposed metric may also be extended towards other tasks, which are not solely image-based, such as 3D object detection

The skilled person having benefit from the present disclosure will appreciate that various options described herein can be used standalone or in combination with each other.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**List of reference signs**

| | |
|---|---|
| 100 | apparatus for evaluating a machine learning model |
| 110 | machine learning model, neural network |
| 112 | input to machine learning model |
| 114 | output of machine learning model |
| 120 | processing circuit |
| 122 | optional input to processing circuit |
| 124 | output of processing circuit |
| 200 | assignment of driving maneuver categories to base areas |
| 210 | driving maneuver category |
| 220 | base area |
| 230 | safety-relevant area |
| 300 | ego vehicle |

| 900 | acceleration profile |
| 910 | acceleration region |
| 1210 | road users |
| 1220 | lanes |
| 1300 | method of evaluating a machine learning model |
| 1310 | determining one or more areas in the proximity of the vehicle |
| 1320 | assigning a higher computational weight to predicted objects inside the relevant areas than to outside the relevant areas |
| 1330 | calculating a performance metric of the machine learning model |

**Claims**

1. A method (1300) of evaluating a machine learning model (110) used for assisted or autonomous driving of a vehicle (300), the machine learning model (110) predicting one or more objects in proximity of the vehicle based on sensor data capturing the proximity of the vehicle, the method (1300) comprising

   determining (1310) one or more areas (230) in the proximity of the vehicle (300) which are safety-relevant for a current driving state or driving maneuver (210) of the vehicle;
   assigning (1320) predicted objects inside the one or more relevant areas (230) a higher computational weight than predicted objects outside the one or more relevant areas; and
   calculating (1330) a performance metric of the machine learning model (110) based on the weighted predicted objects in the proximity of the vehicle (300).

2. The method (1300) of claim 1, wherein determining (1310) the one or more relevant areas (230) comprises determining areas interfering with a projected driving trajectory of the vehicle (300).

3. The method (1300) of claim 1 or 2, wherein determining (1310) the one or more relevant areas (230) is based on an actual or potential driving maneuver of the vehicle and/or infrastructure elements in the proximity of the vehicle.

4. The method (1300) of any one of the previous claims, wherein the determining (1310) the one or more relevant areas (230) comprises determining at least one of

   - an area in front of or adjacent to the vehicle,
   - a lane to be changed to,
   - a lane adjacent to a lane to be changed to,
   - a lane that merges with a lane in which the vehicle is traveling,
   - one or more intersecting lanes,
   - an area including vulnerable road users in front of or adjacent to the vehicle.

5. The method (1300) of any one of the previous claims, wherein the one or more relevant areas (230) are determined on a per-image basis.

6. The method (1300) of any one of the previous claims, wherein predicted objects inside the one or more safety-relevant areas (230) are assigned a relevance-weight in accordance with their respective distance to the vehicle and/or in accordance with their respective object class.

7. The method (1300) of any one of the previous claims, wherein calculating (1330) the performance metric comprises including predicted objects inside the one or more relevant areas (230) into the metric calculation and disregarding predicted objects outside the one or more relevant areas (230) from the metric calculation.

8. The method (1300) of any one of the preceding claims, wherein calculating (1330) the performance metric comprises calculating individual performance metric for each object inside the one or more relevant areas (230).

9. The method (1300) of any one of the preceding claims, wherein calculating (1330) the performance metric comprises calculating a combined performance metric for all objects inside the one or more relevant areas (230).

10. The method (1300) of any one of the preceding claims, wherein calculating (1330) the performance metric comprises calculating an Intersection over Union, IoU, or a mean average precision, mAP, metric.

11. The method (1300) of any one of the preceding claims, comprising
executing the method for a plurality of different machine learning models and/or a plurality of different driving states or driving maneuvers to find a machine learning model having the highest performance metric for a respective driving state or driving maneuver.

12. A computer program product comprising instructions which, when the program is executed by a programmable hardware device, cause the programmable hardware device to carry out a method (1300) of any one of the preceding claims.

13. An apparatus (100) for evaluating a machine learning model (110) used for assisted or autonomous driving of a vehicle (300), the machine learning model predicting one or more objects in proximity of the vehicle based on sensor data capturing the proximity of the vehicle, the apparatus (100) comprising circuitry configured to

determine one or more areas (230) in the proximity of the vehicle which are safety-relevant for a current driving state or driving maneuver of the vehicle;
assign predicted objects inside the one or more relevant areas (230) a higher computational weight than predicted objects outside the one or more relevant areas; and
calculate a performance metric of the machine learning model (110) based on the weighted predicted objects in the proximity of the vehicle (300).

**Amended claims in accordance with Rule 137(2) EPC.**

1. A computer-implemented method (1300) of evaluating a machine learning model (110) used for assisted or autonomous driving of a vehicle (300), the machine learning model (110) predicting one or more objects in proximity of the vehicle based on sensor data capturing the proximity of the vehicle, the method (1300) comprising
determining (1310) one or more areas (230) in the proximity of the vehicle (300) which are safety-relevant for a current driving state or driving maneuver (210) of the vehicle, wherein the determining (1310) the one or more relevant areas (230) comprises determining at least one of

- an area in front of or adjacent to the vehicle,
- a lane to be changed to,
- a lane adjacent to a lane to be changed to,
- a lane that merges with a lane in which the vehicle is traveling,
- one or more intersecting lanes,
- an area including pedestrians or bicyclists in front of or adjacent to the vehicle;
assigning (1320) predicted objects inside the one or more relevant areas (230) a higher computational weight than predicted objects outside the one or more relevant areas; and
calculating (1330) a performance metric of the machine learning model (110) based on the weighted predicted objects in the proximity of the vehicle (300).

2. The method (1300) of claim 1, wherein determining (1310) the one or more relevant areas (230) comprises determining areas interfering with a projected driving trajectory of the vehicle (300).

3. The method (1300) of claim 1 or 2, wherein determining (1310) the one or more relevant areas (230) is based on an actual or potential driving maneuver of the vehicle and/or infrastructure elements in the proximity of the vehicle.

4. The method (1300) of any one of the previous claims, wherein the one or more relevant areas (230) are determined on a per-image basis.

5. The method (1300) of any one of the previous claims, wherein predicted objects inside the one or more safety-relevant areas (230) are assigned a relevance-weight based on their respective distance to the vehicle and/or based on their respective object class.

6. The method (1300) of any one of the previous claims, wherein calculating (1330) the performance metric comprises including predicted objects inside the one or more relevant areas (230) into the metric calculation and disregarding predicted objects outside the one or more relevant areas (230) from the metric calculation.

7. The method (1300) of any one of the preceding claims, wherein calculating (1330) the performance metric comprises calculating individual performance metric for each object inside the one or more relevant areas (230).

8. The method (1300) of any one of the preceding claims, wherein calculating (1330) the performance metric comprises calculating a combined performance metric for all objects inside the one or more relevant areas (230).

9. The method (1300) of any one of the preceding claims, wherein calculating (1330) the performance metric comprises calculating an Intersection over Union, IoU, or a mean average precision, mAP, metric.

10. The method (1300) of any one of the preceding claims, comprising
executing the method for a plurality of different machine learning models and/or a plurality of different driving states or driving maneuvers to find a machine learning model having the highest performance metric for a respective driving state or driving maneuver.

11. A computer program product comprising instructions which, when the program is executed by a programmable hardware device, cause the programmable hardware device to carry out a method (1300) of any one of the preceding claims.

12. An apparatus (100) for evaluating a machine learning model (110) used for assisted or autonomous driving of a vehicle (300), the machine learning model predicting one or more objects in proximity of the vehicle based on sensor data capturing the proximity of the vehicle, the apparatus (100) comprising circuitry configured to
determine one or more areas (230) in the proximity of the vehicle which are safety-relevant for a current driving state or driving maneuver of the vehicle, wherein determining the one or more relevant areas (230) comprises determining at least one of

- an area in front of or adjacent to the vehicle,
- a lane to be changed to,
- a lane adjacent to a lane to be changed to,
- a lane that merges with a lane in which the vehicle is traveling,
- one or more intersecting lanes,
an area including vulnerable road users in front of or adjacent to the vehicle;
assign predicted objects inside the one or more relevant areas (230) a higher computational weight than predicted objects outside the one or more relevant areas; and
calculate a performance metric of the machine learning model (110) based on the weighted predicted objects in the proximity of the vehicle (300).

Fig. 1

| Infrastructure Maneuver | Lead and neighboring vehicles | Approaching vehicles in lane change lane | Approaching vehicles next to lane change lane | Vehicles coming from merging lanes | Vehicles in crossing lanes | VRUs on Crosswalks (Querungsanlage) |
|---|---|---|---|---|---|---|
| Follow Lane | ✓ | ✗ | ✗ | ✗ | ✗ | ✗ |
| Lane Change | ✓ | ✓ | ✓ | ✗ | ✗ | ✗ |
| Approach Junction | ✓ | ✗ | ✗ | ✓ | ✓ | ✗ |
| Cross Junction | ✓ | ✗ | ✗ | ✓ | ✓ | ✗ |
| Turn Left | ✓ | ✗ | ✗ | ✓ | ✓ | (✓) |
| Turn Right | ✓ | ✗ | ✗ | ✓ | ✗ | (✓) |
| Approach Crosswalk | ✓ | ✗ | ✗ | ✗ | ✗ | ✓ |
| Cross Crosswalk | ✓ | ✗ | ✗ | ✗ | ✗ | ✓ |

200

230-1 220-1 230-2 220-2 230-3 220-3 230-4 220-4 230-5 220-5 230-6 220-6

210-1 210-2 210-3 210-4 210-5 210-6 210-7 210-8

Fig. 2

EP 4 224 434 A1

Fig. 3a

Fig. 3b

$220\text{-}7; 230\text{-}7 \quad S_{l,ego} \qquad S_B + S_{tol}$

$300$

$S_{l,ego} \qquad S_{lat}$

**Fig. 4**

$220\text{-}2; 230\text{-}2 \quad S_{lb} \qquad l_{ego} \qquad S_B + S_{tol}$

$300$

**Fig. 5**

220-3; 230-3 $S_{lb}$ $I_{ego}$ $S_B + S_{tol}$

**Fig. 6**

300

220-8; 230-8 $S_m$

300

**Fig. 7**

Fig. 8

Fig. 9

220-5; 230-5

300   S$_c$   **Fig. 10**

220-6; 230-6

$r_{circ}$

300   $l_{cw}$   $r_{circ}$   **Fig. 11**

1210   1210   1210   1210   1210

1210

1210

1210   1210

300  1220   220-x; 230-x

1210

**Fig. 12**

1300

1310

1320

1330

**Fig. 13**

Europäisches
Patentamt

European
Patent Office

Office européen
des brevets

# EUROPEAN SEARCH REPORT

Application Number

EP 22 15 4886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PADILLA RAFAEL ET AL: "A Survey on Performance Metrics for Object-Detection Algorithms", 2020 INTERNATIONAL CONFERENCE ON SYSTEMS, SIGNALS AND IMAGE PROCESSING (IWSSIP), IEEE, 1 July 2020 (2020-07-01), pages 237-242, XP033795995, DOI: 10.1109/IWSSIP48289.2020.9145130 [retrieved on 2020-07-20] * Section III * | 1-13 | INV. G06V10/776 G06V10/70 G06V20/58 |
| X | HOIEM DEREK ET AL: "Diagnosing Error in Object Detectors", 21 July 2020 (2020-07-21), ARXIV.ORG, PAGE(S) 340 - 353, XP047530688, * Section 3.2 * | 1-13 | |

TECHNICAL FIELDS
SEARCHED       (IPC)

G06V

The present search report has been drawn up for all claims

| Place of search | Date of completion of the search | Examiner |
|---|---|---|
| The Hague | 30 June 2022 | Rajadell Rojas, Olga |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                               

& : member of the same patent family, corresponding document

EPO FORM 1503 03.82 (P04C01)